# EUROPEAN PATENT APPLICATION

(11) **EP 2 624 107 A2**
(43) Date of publication of application: **07.08.2013**
(21) Application number: 13153696.3
(22) Date of filing: 01.02.2013
(51) Int. Cl.: G06F 3/041, G06F 3/0488

(54) **Method of operating multi-touch panel and terminal supporting the same**

(30) Priority: 03.02.2012 KR 20120011243
(71) Applicant: Samsung Electronics Co., Ltd, Gyeonggi-do 443-742 (KR)
(72) Inventor: Choi, Seohyun, 443-742 Gyeonggi-do (KR)
(74) Representative: Nederlandsch Octrooibureau

(57) **Abstract**

A method of operating a multi-touch panel and a terminal supporting the same that includes at least two panels that detect touch in different ways. The method of operating a multi-touch panel includes collecting a value detected from a specific touch panel and a touch event detected from another touch panel according to contact of a touch object in a plurality of touch panels to which different touch techniques are applied; and differently applying the touch event according to the detection value.

## Description

### BACKGROUND OF THE INVENTION

### Field of the Invention

The present invention relates to touch panels for electronic displays. More particularly, the present invention relates to multi-touch panels capable of performing various operations based on collected touch events determined by a variation value such as pressure on the multi-touch panel, and a terminal supporting the same.

### Description of the Related Art

Since a portable terminal supports a specific user functions far beyond simple voice communication, and the size thereof has small so that the user may easily carry, such portable terminals have come into widespread use both personally and by industry. More recent portable terminals integrally supporting various user functions and provide a screen corresponding to a user function through a display unit while also supporting the user function. Accordingly, specific user functions to access desired content is made through a touch screen, rather than through cumbersome commands or physical keyboards.

Meanwhile, in order to increase the size of a display unit on a portable device, a technique of providing a full touch screen form using an entire surface of a terminal as both the display and as an input device has become an area of development.

The touch panel techniques include a capacitive type which detects a change of capacitance to detect a touch and a resistive type detecting change in resistance according to pressure variation during a touch to detect the touch. The capacitive type relatively reacts as compared with the resistive type, which has a rapid touch operation and small physical force is applied to a touch panel, thereby preventing a touch panel from being damaged. However, the capacitive type is more sensitive as compared with the resistive type, an erroneous operation according to a touch occurs when the user does not wish. In fact, "near touch" can cause a function to be activated.

In a case of the resistive type, the user directly touches and pressurizes the touch panel to change a gap of a panel so that a touch is detected. Accordingly, a touch operation in the resistive type touch panel is usually clearly supported without a separate erroneous operation. However, the touch operation according to the pressurizing action lowers touch sensitivity and relatively highly damages the panel.

Meanwhile, in recent years, an approach of compensating for the disadvantages of the capacitive type with the resistive type, or compensating for the disadvantages of the resistive type with the capacitive type is suggested by overlapping construction of the capacitive type with the resistive type. Since a current developed and introduced touch panel technique compensates only disadvantages of different techniques, it does not permit any special services to be provided to the user, or to increase the convenience of use.

### SUMMARY OF THE INVENTION

The present invention has been made at least in part in view of the above problems, and provides a method of operating a multi-touch panel that intuitively and conveniently operates a specific user function based on touch panels implemented by different touch techniques, and includes a terminal supporting the same.

The present invention further provides a method of operating a multi-touch panel that simply and easily operates various user functions of a terminal within a limited region, and includes a terminal supporting the same.

The present invention further provides a method of operating a multi-touch panel that easily controls and operates a user function without a change of hands or a screen switching when operating a touch panel of a user, and includes a terminal supporting the same.

### [advantageous effect]

In accordance with an exemplary aspect of the present invention, a terminal for supporting an operation of a multi-touch panel preferably includes: a first type touch panel collecting a touch event according to a contact; a second type touch panel collecting a detection value of at least one of pressure, pressure variation, resistance, resistance variation, a voltage, and voltage variation according to the contact; a controller controlling such that a command corresponding to the touch event collected by the first type touch panel is applied differently according to the detection value from the second type touch panel; and a memory storing a plurality of defined mapping tables such that a command corresponding to the touch event is provided in different ways according to the detection value.

In accordance with another exemplary aspect of the present invention, a method of operating a multi-touch panel, preferably includes: collecting a value detected from a specific touch panel and a touch event detected from another touch panel according to contact of a touch object in a plurality of touch panels to which different touch techniques are applied; and differently applying the touch event according to the detection value.

### BRIEF DESCRIPTION OF THE DRAWINGS

The exemplary objects, features and advantages of the present invention will become more apparent from the following detailed description in conjunction with the accompanying drawings, in which:
FIG. 1 is a schematic view illustrating a configuration of a display unit of a terminal supporting an operation function of a multi-touch panel according to an exemplary embodiment of the present invention;
FIG. 2 is a block diagram illustrating a configuration of a terminal according to an exemplary embodiment of the present invention in detail;
FIG. 3 is a block diagram illustrating a configuration of a controller of constituent elements of the terminal according to an exemplary embodiment of the present invention;
FIG. 4 is a flowchart illustrating a method of operating a multi-touch panel according to an exemplary embodiment of the present invention;
FiGs. 5A and 5B are an exemplary diagram of a screen for describing web browsing search control of function application of a multi-touch panel according to a first exemplary embodiment of the present invention;
FIG. 6 is an exemplary diagram of a screen for describing unlock pattern output control of function application of a multi-touch panel according to a second exemplary embodiment of the present invention;
FIG. 7 is an exemplary diagram of a screen for describing character input function control of function application of a multi-touch panel according to a third exemplary embodiment of the present invention;
FIG. 8 is an exemplary diagram of a screen for describing moving image playback control of function application of a multi-touch panel according to a fourth exemplary embodiment of the present invention;
FIG. 9 is an exemplary diagram of a screen for describing still image search control of function application of a multi-touch panel according to a fifth exemplary embodiment of the present invention;
FIG. 10 is an exemplary diagram of a screen for describing search control of a plurality of pages in function application of a multi-touch panel according to a sixth exemplary embodiment of the present invention;
FIG. 11 is an exemplary diagram of a screen for describing search control of a hide region of function application of a multi-touch panel according to a seventh exemplary embodiment of the present invention;
FIG. 12 is an exemplary diagram of a screen for describing depth search control of function application of a multi-touch panel according to an eighth exemplary embodiment of the present invention; and
FIG. 13 is an exemplary diagram of a screen for describing operation control of a game function of function application of a multi-touch panel according to a ninth exemplary embodiment of the present invention.

### DETAILED DESCRIPTION

Exemplary embodiments of the present invention are described with reference to the accompanying drawings in detail. The same reference numbers are used throughout the drawings to refer to the same or like parts. Detailed descriptions of well-known functions and structures incorporated herein may be omitted to avoid obscuring appreciation of the subject matter of the present invention by a person of ordinary skill in the art.

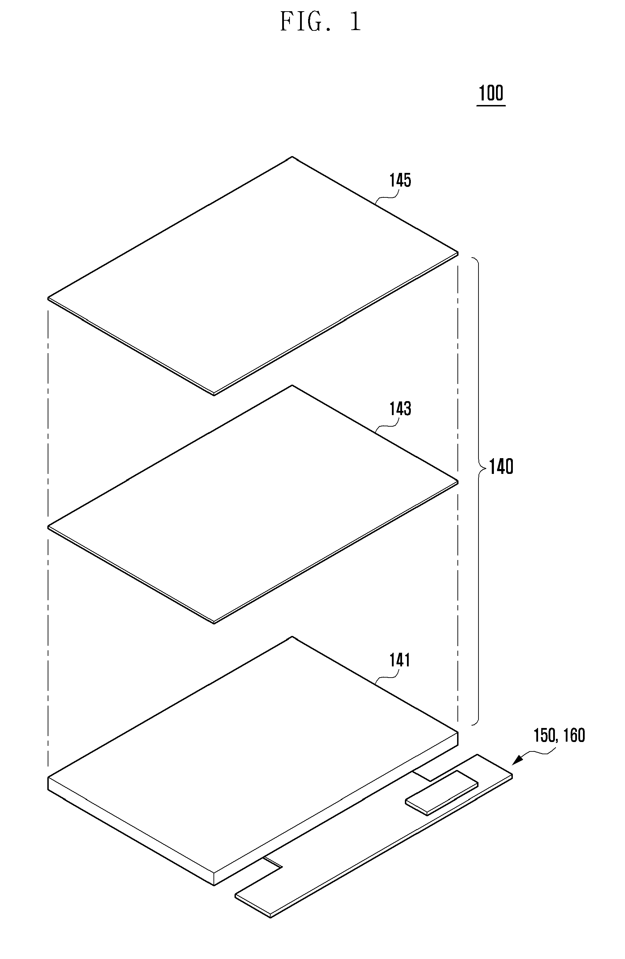

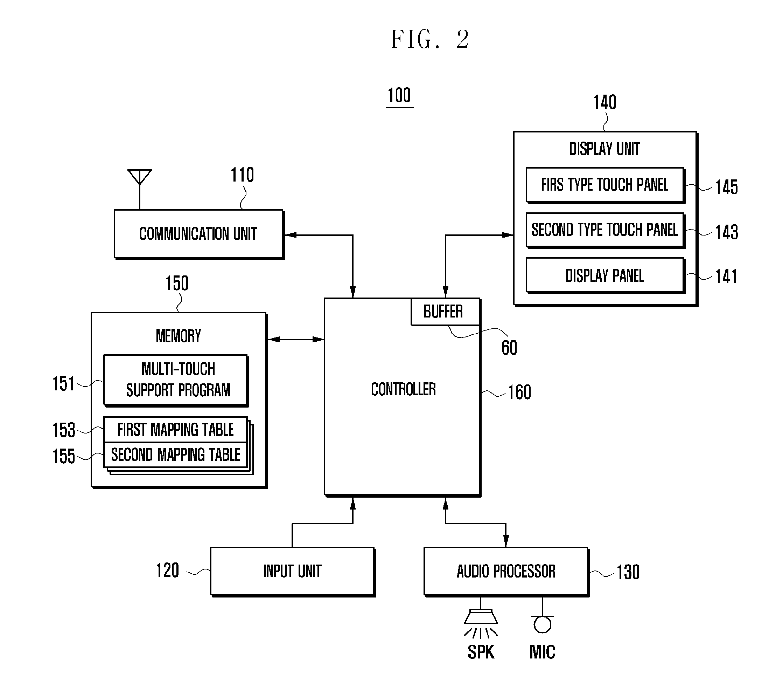

FIG. 1 is a schematic view illustrating constituent elements of a display unit including touch panels and display panels and a control module of a terminal according to according to an exemplary embodiment of the present invention, and FIG. 2 is a block diagram illustrating a configuration of a terminal according to an exemplary embodiment of the present invention in detail.

Referring now to FIGS. 1 and 2, the terminal 100 may include a communication unit 110, an input unit 120, an audio processor 130, a display unit 140, a memory 150, and a controller 160. The display unit 140 may include a first type touch panel 143, a second type touch panel 145, and a display panel 141.

The terminal 100 having a configuration mentioned above can perform different user functions to process separate touch events collected from different touch panels according to a detection value of a touch panel capable of detecting change of at least one of pressure, resistance, and a voltage among the first type touch panel 143 and the second type touch panel 145 constituting the display unit 140.

For example, when the controller 160 determines that a detection value associated with touch including, for example, at least one of a pressure variation value, a voltage variation value, a resistance variation value, or a corresponding variation value detected from the second type touch panel 145 is less than or equal to a preset value, a touch event generated from the first type touch panel 143 may apply a function based on the first mapping table 153.

In addition, when the controller 160 determines that a detection value associated with touch including at least one of a pressure variation value, a voltage variation value, a resistance variation value, or a corresponding variation value detected from the second type touch panel is greater than the preset value, the touch event generated from the first type touch panel 143 may apply a function based on the second mapping table 155.

According to the present invention, although the user performs the same posture and the same gesture in touch control of the terminal, a command may be easily generated to control various functions by adjusting strength and weakness of a force. Hereinafter, it is assumed that the second type touch panel 145 is a touch panel detecting, for example, a detection value including a pressure variation value, a voltage variation value, a resistance variation value, or a corresponding variation value and the first type touch panel 143 is a touch panel capable of generating a touch event according to contact. In this case, different touch techniques are applicable to the first type touch panel 143 and the second type touch panel 145, respectively. Various types such as a resistive type, a capacitive type, an electromagnetic induction type, and an infrared type are applicable as the touch technique. Hereinafter, it is assumed that the second type touch panel detects a pressure value. However, the present invention is not limited thereto. Hereinafter, the pressure value may be substituted by a voltage or a resistance value, and the voltage and the resistance value may be incorporated with each other as the pressure value. Also, although FIG. 1 shows an alignment of touch panels 143, 145, the claimed invention is not limited to such a structure and it is within the spirit and scope of the present invention that there could be a partial overlap of the touch panels.

The communication unit 110 comprises hardware and supports a communication function of the terminal 100, which can be wireless or wired, and includes hardware such as receiver, transmitter and/or transceiver. Particularly, when the terminal 100 is manufactured in the form of a terminal supporting the communication function, the communication unit 110 may be added. Accordingly, in the case where the terminal 100 of the present invention does not support the communication function, the communication unit 110 may be omitted from the configuration of the terminal 100 (in other words, any device with a touch screen may benefit from this invention, not just devices with a wireless communication unit). Meanwhile, the communication unit 110 may configured in the form of a mobile communication module including a machine readable medium with machine executable code that is loaded into hardware such as a processor or microprocessor to support a communication function, particularly, a mobile communication function of the terminal 100. The communication unit 110 forms a communication channel to support signal transceiving for performing a mobile communication function of the terminal 100. For example, the communication unit 110 may form at least one of an audio service channel, an image service channel, and a data service channel with a mobile communication system and support transceiving of a specific signal according to a corresponding service channel.

The communication unit 110 may be activated or its operation changed according to a user request. In this case, the various control maps for controlling the communication unit 110 may be output on the display panel 141 for the user to activate or modify operation. Particularly, the communication unit 110 of the present invention may operation various preset user functions according to a specific touch event generated from the display unit 140. In this case, the communication unit 110 may perform different functions according to strength and weakness of a touch even if the touch event is a touch event corresponding to the same gesture event generated from the display unit 140. For example, when a touch event of a first direction occurs with the first pressure in a received state of the call, the communication unit 110 may form a communication channel for connecting a corresponding call. When the touch event of a first direction occurs with the second pressure in a received state of the call, the communication unit 110 may process a signal for rejecting a corresponding call. The terminal 100 of the present invention may operate different user functions according to strength and weakness of a touch with respect to a touch event necessary for operating the communication unit 110.

The input unit 120 generates various input signals necessary for operating the terminal 100. The input unit 120 may be configured by various input means such as a key board, a key pad, and a key button according to compatibility of the terminal 100.

When the display unit 140 is provided as a touch screen, the input unit 120 may be configured in the form of a touch map outputted on the touch screen. The input unit 120 of the present invention may generate a mode section signal determining presence of activation of an operation function of a multi-touch panel according to the present invention according to a user request. In other words, when receiving a mode selection signal for activating operation of a multi-touch panel, the terminal 100 may apply different user functions based on the strength of a touch. When receiving a mode non-selection signal for inactivating an operation of the multi-touch panel from the input unit 120, the terminal 100 may apply a user function based on a preset specific mapping table regardless of strength and weakness of the touch. For example, the terminal 100 may operate a user function according a touch event input based on one of the first mapping table 153 and the second mapping table according to preset schedule information in which a mode non-selection signal from the input unit 120 is generated or apply the user function based on a third mapping table separately provided.

The audio processor 130 may output various audio data set during an operation procedure of the terminal 100, audio data according to playback of an audio file stored in the memory 150, and audio data received from the outside. The audio processor 130 may support a collection of audio data. In order to support audio data, the audio processor 130 may include a speaker SPK and a microphone MIC, or an interface for ear buds, or wireless earpiece, etc.. Particularly, the audio processor 130 may output a sound effect or a guide sound set according to an operation function of a multi-touch panel. For example, the audio processor 130 may output an sound effect or a guide sound according to an activated state or an inactivated state of an operation mode of the multi-touch panel. The audio processor 130 may differently output an sound effect according to the strength of the touch in a state that an operation mode of a multi-touch panel is activated.

Accordingly, the user may recognize a touch function to be performed through a sound effect or a guide sound directly or temporarily. The output of the sound effect and the guide sound may be omitted according to setting of the terminal or the user.

The display unit 140 provides various screen interfaces necessary for operating the terminal 100. For example, the display unit 140 supports an idle screen and a menu screen necessary for operating the terminal 100. Particularly, the display unit 140 of the present invention may output operation screens of different user functions according to touch events collected from the multi-touch panels. The display unit 140 may provide different visual effects according to touch pressure. Various exemplary embodiments with respect to the display unit 140 will be described with reference to following drawings.

Meanwhile, although not expressly shown in FIG. 1, the display unit 140 may be provided in the form of a touch screen which is an overlapping form of the display panel 141, the first type touch panel 143, and the second type touch panel 145. The display panel 141 may output an image and a text corresponding to the foregoing various screens and particularly output a screen configuration element according to activation of a specific user function.

With continued reference to FIGs. 1 and 2, the first type touch panel 143 generates a touch event according to a contact or approach. For example, the first type touch panel 143 may be configured by a capacitive type touch panel, an electromagnetic induction type touch panel, or an infrared type touch panel. Accordingly, when a finger of the user or a touchable object approaches within a predetermined distance or contact with the first type touch panel 143, particularly, when the finger of the user or a touchable object contacts with a surface of the second type touch panel 145 provided at an upper portion of the first type touch panel 143, the first type touch panel 143 generates and transfers variation of capacitance according to contact or approach to the controller 160. The first type touch panel 143 may be arranged in the form of a matrix to detect a touch generated in a specific location among entire regions.

The second type touch panel 145 may be, for example, a type of detecting a detection value including at least one of a pressure variation value, a voltage variation value, a resistance variation value, or a corresponding variation value according to a contact, for example, a resistive type touch panel. The second type touch panel 145 may be disposed as an upper portion of the first type touch panel 143. FIG. 1 illustrates that the second type touch panel 145 is disposed at an upper portion of the first type touch panel 143, but the second type touch panel 145 may be disposed at a lower portion of the first type touch panel 143. The second type touch panel 145 may detect pressure, resistance, or a voltage changed according to applied pressure from a contact touch object, and may transfer the detection result to the controller 160. The second type touch panel 145 may transfer a detection value including at least one of a pressure variation value, a voltage variation value, a resistance variation value, or a corresponding variation value according to contact of an object to the controller 160.

The memory 150, which comprises a non-transitory machine readable medium, may store various basic operating systems necessary for an operation of the terminal 100 and data or an application program corresponding to various user functions, and an algorithm. Particularly, the memory 150 may store a multi-touch support program 151 and various mapping tables, for example, a first mapping table 153 and a second mapping table 155 to operate a multi-touch panel. In addition, the memory 150 may include a third mapping table operating a user function according to a touch event in a state that an operation mode of a multi-touch panel of the present invention is inactivated.

The multi-touch support program 151 comprises machine executable code on the machine readable medium of the memory 150 that is loaded in hardware such as a processor or microprocessor that supports an operation of the multi-touch panel. The multi-touch support program 151 may include a routine of activation or inactivation of an operation mode of a multi-touch panel, a routine of activating at least one of the first type touch panel 143 and the second type touch panel 145 according to user setting when the operation mode of the multi-touch panel is inactivated, and a routine of activating both of the first type touch panel 143 and the second type touch panel 145 when the operation mode of the multi-touch panel is activated. The multi-touch support program 151 may include a routine of inspecting at least one of pressure, resistance, and a voltage is changed greater than a preset value, and a routine of selectively operating the first mapping table 153 or the second mapping table 155 according to presence of generation of corresponding change. The following description will be made on the assumption that preset pressure is changed in the second type touch panel 145.

When a detection value collected from the second type touch panel 145 is less than or equal to a predetermined value in an operation mode of a multi-touch panel, the first mapping table 153 is a table mapping commands for operating a user function according to a collected touch event. In this case, the first mapping table 153 may include commands defining a touch event generated from at least one touch panel 143 and 145 when the detection value is less than or equal to the predetermined value.

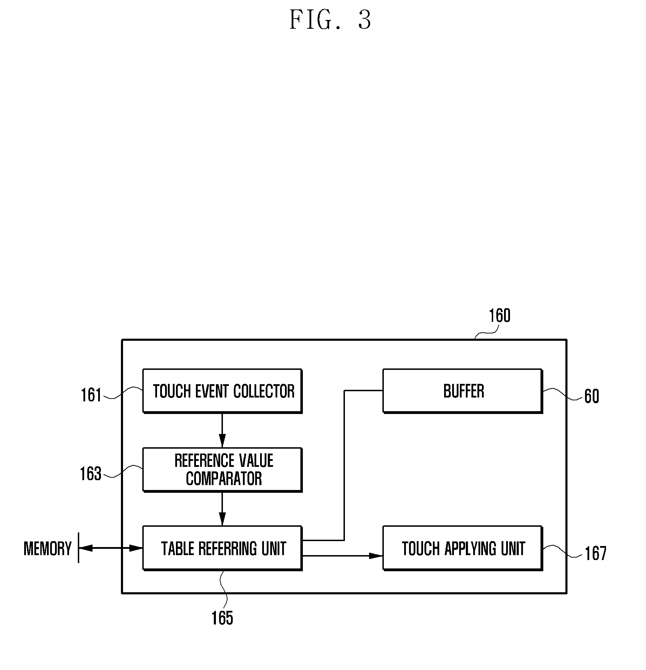

When a detection value collected from the second type touch panel 145 is greater than or the predetermined value in an operation mode of a multi-touch panel, the second mapping table 155 provides mapping commands for operating a user function according to a collected touch event. In this particular case, the second mapping table 155 may include commands corresponding to the touch event generated from the at least one touch panel 143 and 145 when the detection value is greater than the predetermined value. The commands can be loaded into a microprocessor of the controller. There may be a separate microprocessor for determining the operations of touch screen or, this functionality could be loaded into a microprocessor with other functional instructions to configure the controller 160. FIG. 3 shows one possible hardware configuration for operation of the presently claimed invention.

An operation of a user function based on the first mapping table 153 and the second mapping table 155 will be described in detail with reference to following exemplary diagrams of a screen.

The controller 160 controls the flow of various signals, and collection and output of an information to support an operation function of a multi-touch panel according to the embodiment of the present invention. The controller 160 activates the first type touch panel 143 and the second type touch panel 145 according to preset schedule information. The controller 160 may control an operation of the user function according to a collected touch event based on one of the first mapping table 153 and the second mapping table 155 according to detection of preset pressure variation in the second type touch panel 145.

When a battery or solar cell is disposed at the terminal 100, the controller 160 may convert power into respective constituent elements of the terminal 100 and provide the converted power to corresponding constituent elements.

As shown in FIG. 3, in order to controller an operation of the user as described herein above such as the above paragraph, the controller 160 may include processors or microprocessors such as a touch event collector 161, a reference value comparator 163, a table referring unit 165, a touch applying unit 167, and a buffer 60 for supporting the table referring unit 165.

The touch event collector 161, which controls at least one of the first type touch panel 143 and the second type touch panel 145, is activated according to preset schedule information and mode selection signal. For example, when the operation function of the multi-touch panel of the present invention is activated, the touch event collector 161 may control such that both of the first type touch panel 143 and the second type touch panel 145 are activated.

When the operational functionality of the multi-touch panel according to the present invention are inactivated, the touch event collector 161 may control such that one of the first type touch panel 143 and the second type touch panel 145 is activated. The touch event collector 161 may control such that both of the first type touch panel 143 and the second type touch panel 145 are activated even if the operation function of the multi-touch panel is inactivated. When the operation function of the multi-touch panel is inactivated, the touch event collector 161 may control such that touch events such as pressure variation, resistance variation, and voltage variation of the second type touch panel 145 are not transferred to the reference value comparator 163.

Meanwhile, the touch event collector 161 may collect a touch event according to a touch operation generated from at least one of the first type touch panel 143 and the second type touch panel 145. The touch event collected according to the touch operation may be transferred to the table referring unit 165. More particularly, when the operational functionality of the multi-touch panel is activated, the touch event collector 161 may transfer a touch event according to pressure variation generated from the second type touch panel 145 to the reference value comparator 163. The touch event collector 161 may transfer the touch event generated from the first type touch panel 143 to the table referring unit 165.

With continued reference to FIG. 3. the reference value comparator 163 determines whether the touch event from the second type touch panel 145 is equal to and less or greater than a preset reference value, or a preset specific level, and transfers the determination result to the table referring unit 165. The reference value comparator 163 also compares pressure variation generated from the second type touch panel 145 with a reference value based on at least preset reference information. When the pressure variation is equal to or greater than the preset reference value or is the specific level, the reference value comparator 163 may transfer a defined specific signal to the table referring unit 165. When the pressure variation is less than the preset reference value, the reference value comparator 163 does not transfer a separate signal and may transfer information indicating that the pressure variation is less than the preset reference value to the table referring unit 165.

The table referring unit 165 detects a command corresponding to a touch event provided from the touch event collector 161 and transfers the detected command to the touch applying unit 167 according to a signal provided from the reference value comparator 163. For example, when a separate signal is not transferred from the reference value comparator 163 or information indicating that the pressure variation is less than the preset reference value is transferred, the table referring unit 165 may detect a command based on information defined in the first mapping table 153. When receiving information indicating that the pressure variation is equal to or greater than the preset reference value or is a specific level, the table referring unit 165 may detect a command corresponding to a touch event provided from the touch event collector 161 based on information defined in the second mapping table 155.

In addition, the table referring unit 165 may operate the buffer to detect a command corresponding to a touch event provided from the touch event collector 161. If the touch event collector 161 transfers a touch event according to a touch operation, the table referring unit 165 may temporarily store the touch event in the buffer 60, and determine whether a specific signal from the reference value comparator 163 is transferred within a preset time. If the specific signal is transferred or is not transferred within a preset time from the reference value comparator 163, the table referring unit 165 may determine whether to use the first mapping table 153 or the second mapping table 155 according the result. When a specific signal is not transferred within a preset time or a signal indicating that the pressure variation is less than the reference value is transferred, the table referring unit 165 may refer the first mapping table 153 based on the foregoing example.

Meanwhile, in the foregoing description, two mapping tables are provided, and a technique of operating the multi-touch panel is described based on the two mapping tables, but the present invention is not limited thereto. In other words, the terminal 100 of the present invention may prepare at least two mapping tables and control such that a user function is executed referring to respective mapping tables according to a pressure variation level. For example, when pressure variation according to a touch operation provided from the second type touch panel 145 is less than a first pressure, the table referring unit 165 refers to the first mapping table 153. When the pressure variation is less than second pressure greater than the first pressure, the table referring unit 165 refers the second mapping table 155. When the pressure variation is equal to or greater than the second pressure, the table referring unit 165 may refer to a third mapping table which may be further provided but not shown.

The touch applying unit 167 processes an operation of a user function according to a command provided from the table referring unit 165 and a screen of a display panel 141 according thereto.

For example, if a first command based on the first mapping table 153 corresponding to a touch operation of first pressure and a first form is transferred, the touch applying unit 167 may perform an operation of a function, for example, page turning or unlock according to a corresponding command. If a second command based on the second mapping table 155 corresponding to a touch operation of second pressure and the first form is transferred, the touch applying unit 167 may perform an operation of a function, for example, page switch, output of a hide region including a quick region or a menu region. Execution of various commands of the touch applying unit 167 will be described in detail with reference to a following exemplary diagram of a screen.

As described above, the terminal 100 of the present invention may recognize a touch event according to the touch operation as different touch operations based on at least one of pressure variation, resistance variation, and voltage variation even if a similar touch operation occurs, and execute different user functions according thereto. Accordingly, when touch control is performed in a state that a user grasps a terminal having a large screen display unit by one hand, the terminal 100 may generate various touch events which allows a user to easily control a desired user function. Particularly, the user does not exchange hands and switches or control various function which the user function supports using only a thumb.

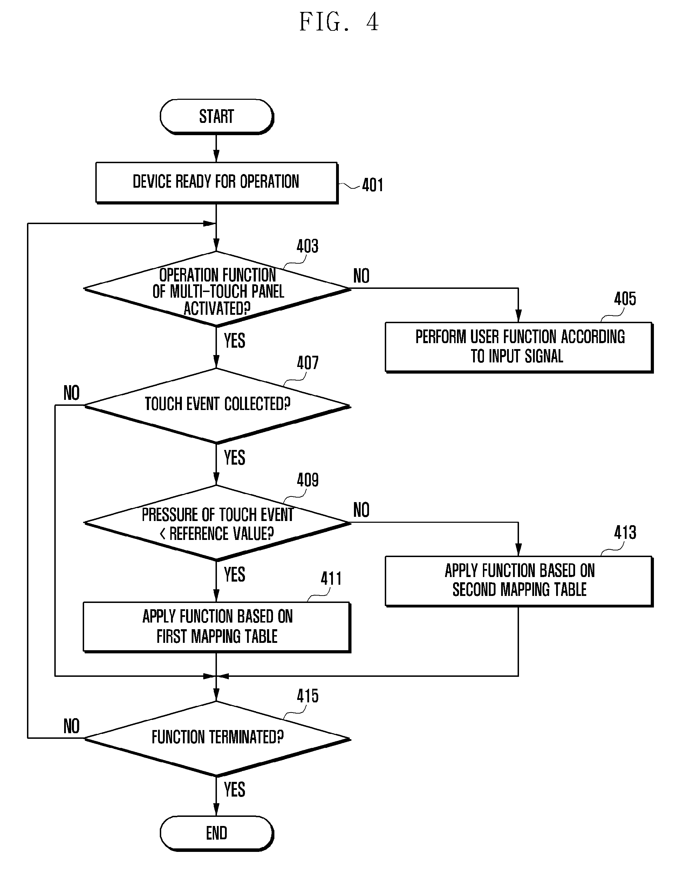

FIG. 4 is a flowchart illustrating exemplary operation a method of operating a multi-touch panel according to an exemplary embodiment of the present invention.

Referring now to FIG. 4, in the method of operating a multi-touch panel according to an exemplary embodiment of the present invention, .To control an operation of a multi-touch panel of the present invention, the controller 160 may control such that power is supplied to the second type touch panel 143, the second type touch panel 145, and the display panel 141 upon powering on the device.

At 401, the device is ready operation. Next, at (403), the controller 160 may determine whether an operation function of a multi-touch panel is activated. In other words, at (403) the controller 160 may determine whether a mode selection signal for activating an operation function of the multi-touch panel is generated. The controller 160 may determine whether or not the operation function of the multi-touch panel is set in default.

When at (403) a corresponding function is not set or a mode selection signal is not generated("No" leg), then at (405) the controller 160 may control such that a corresponding user function is activated according to preset schedule information, an input signal, or a touch event.

However, when at (403) the operation function of the multi-touch panel is set or a mode selection signal for setting is generated ("yes leg"), then at (407) the controller 160 may activate the first type touch panel 143 and the second type touch panel 145 and determine whether a touch event is generated. More particularly, the controller 160 may collect and confirm a touch event generated from the second type touch panel 145 to detect pressure. In this case, if a touch event is transferred from the first type touch panel 143, the controller 160 may temporarily store a corresponding touch event in a buffer 60, and control such that the corresponding touch event is processed according to a comparison result of pressure.

If at (407) the touch event according to a specific touch operation is collected, then at (409) the controller 160 may compare pressure of the touch event with a reference value.

When at (409) the pressure of the touch event is less than the reference value, the controller 160 may apply a function based on the first mapping table 153 (411).

However, when at (409) the pressure of the touch event is equal to or greater than the reference value, then at (413) the controller 160 may apply a function based on the second mapping table 155. To do this, the controller 160 may refer to the first mapping table 153 or the second mapping table 155 stored in the memory 150. While it is preferred to use maps, a person of ordinary skill in the art should understand and appreciate there are other ways of storing the function(s).

After step (413), the controller 160 at (415) may determine whether an input signal for terminating a function is generated. When at (415) the input signal for terminating a function is not generated, the controller 160 may return to step 403 and repeat the foregoing procedures.

As described above, the method of operating a multi-touch panel of the present invention may control such that various touches are controlled by comparing pressure of the touch event with the reference value. The pressure may be substituted by pressure variation.

The foregoing exemplary embodiment has illustrated the method of operating a multi-touch panel and the terminal supporting the same. Hereinafter, various exemplary embodiments of the method of operating a multi-touch panel and the terminal supporting the same will be described in detail with reference to various screen exemplary diagrams. All of the examples are provided for illustrative purpose and under no circumstance should the appended claims being interpreted as being limited to the express examples herein.

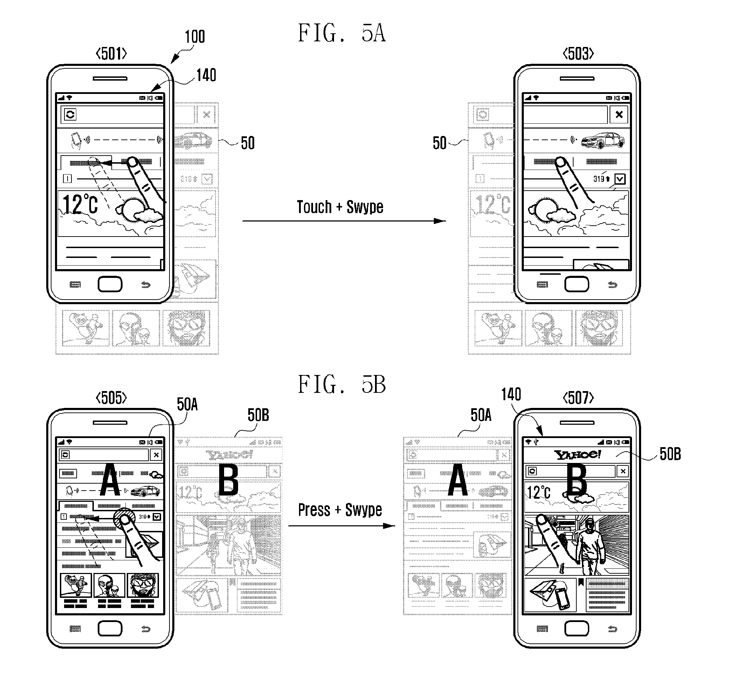

FIGs. 5A and 5B are an exemplary diagram of a screen for describing web browsing search control of function application of a multi-touch panel according to a first embodiment of the present invention. Referring now to FIGs. 5A and 5B, the terminal 100 of the present invention may connect with a specific web server according to a user request, and receive information about a specific web page from a corresponding web server through a communication unit 110. Then, the terminal supports the display unit 140 to output a corresponding web page. In this procedure, the controller 160 may determine whether a web browsing function is a user function included in an operation function list of a multi-touch panel. When the web browsing function is the user function included in an operation function list of a multi-touch panel, the controller 160 may control the first type touch panel 143 and the second type touch panel 145 to be activated.

As shown, when the corresponding web page 50 is larger than a screen region of the display unit 140 during output of the web page 50, the terminal 100 may output only a partial region of the web page 50 as illustrated in screen 501. If a predetermined touch event occurs in the display unit 140, the terminal 100 may detect pressure of a corresponding touch event. When the touch event generated from the display unit 140 is a touch event according to a touch, move, drag, flick or swipe operation less than preset pressure, the terminal 100 may move a screen of a web page 50 displayed as illustrated in screen 503. In other words, the terminal 100 may control the display unit 140 to output another region of a web page 50 according to a direction of the generated touch event less than predetermined pressure.

Meanwhile, as described above, the terminal 100 may connect with a specific web server and receive page information corresponding to a first web page 50A from a corresponding web server. Then, the terminal 100 may control the display unit 140 to output the first web page 50A as illustrated in screen 505. In this procedure, the user may perform a touch, swipe, or drag operation greater than the predetermined pressure is generated on the display unit 140 to request search of another web page. If the touch and swipe or drag operation greater than the predetermined pressure is generated, the terminal 100 may remove the first web page 50A from the display unit 140 and output the second web page 50B on the display unit 140 as illustrated in a screen 507. To do this, the terminal 100 may control to request the second web page 50B to a web server providing the first web page 50A or to request the second web page 50B to a corresponding web server.

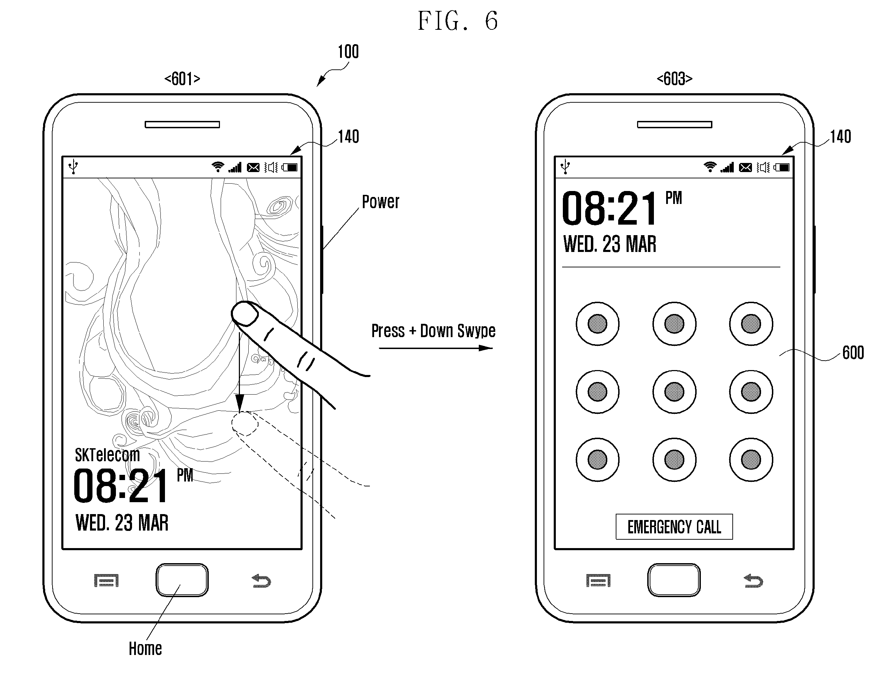

FIG. 6 is an exemplary diagram of a screen for describing unlock pattern output control of function application of a multi-touch panel according to a second embodiment of the present invention.

Referring now to FIG. 6, the terminal 100 of the present invention may activate a lock function according to user control, lapse of preset time, and schedule information. For example, the terminal 100 may output a screen set in default or set according to user selection on the display unit 140 before the terminal 100 enters a preset user function as illustrated in a screen 601. In this procedure, the terminal 100 may maintain a touch lock function in active state. Then, the user may request a hide pattern call for releasing a touch lock function of a corresponding terminal 100. As shown, the user may swipe or drag operation in a predetermined direction, for example, downward in a state of touching a predetermined point of a display unit 140 greater than predetermined pressure using a touch object such as a finger.

If a touch event according to a touch operation such as drag, flick, and swipe in a predetermined direction in a touch state greater than predetermined pressure, the terminal 100 may control the display unit 140 to output a release pattern 600 for releasing a touch lock function as illustrated in a screen 603. When the user performs an operation of pushing a power button or a home button for unlock release in a grasped state, such a function may be supported through output of the release pattern 600. However, in a case where the display unit 140 gradually becomes larger, there can be difficulty in pushing the power button or the home button in a state of grasping the terminal 100 by one hand. The terminal 100 of the present invention may perform a corresponding function by performing only a touch operation greater than predetermined pressure in a specific region of the display unit 140 regardless of pushing a button.

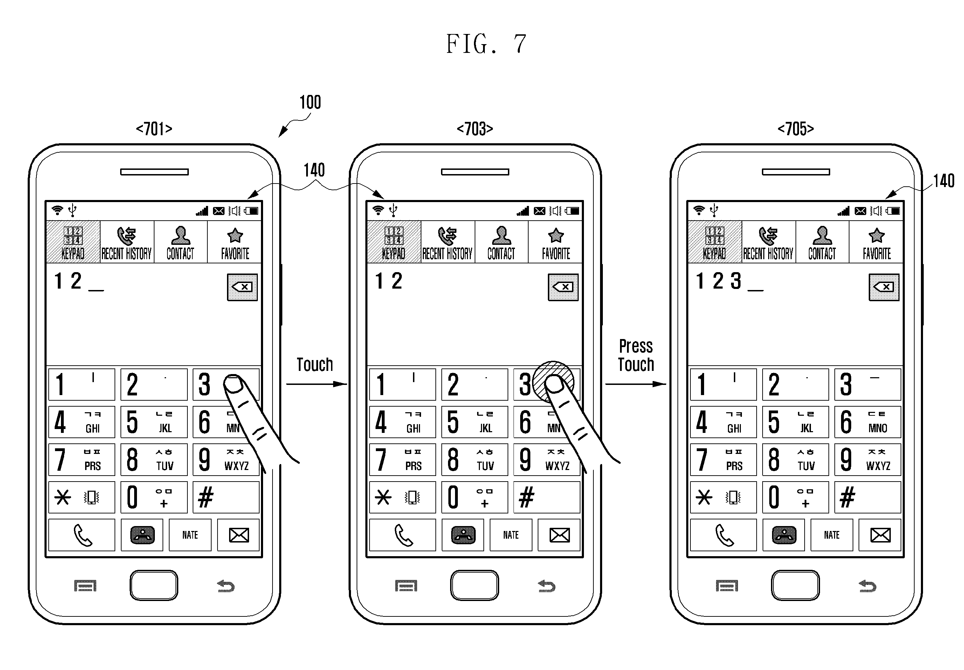

FIG. 7 is an exemplary diagram of a screen for describing character input function control of function application of a multi-touch panel according to a third exemplary embodiment of the present invention.

Referring now to FIG. 7, the terminal 100 of the present invention may output a screen corresponding to a character input function as illustrated in a screen 701 according to a user request. The character input function may be a function associated with various user functions. For example, in the terminal 100, a screen 701 of the character input function support may be a function screen for inputting a phone number, a calculator support function screen, a short message or e-mail or SNS message creation function screen.

Meanwhile, if a character input function screen is outputted, the user touches a specific region of the character input region greater than predetermined pressure to input a corresponding character. In other words, when a touch event according to a touch operation less than predetermined pressure occurs as illustrated in a screen 701, the terminal 100 does not apply character input selected according to a corresponding touch operation but waits for the character input. When a touch event according to a touch operation greater than predetermined pressure as illustrated in a screen 703, the terminal 100 may determine that a character input function selected by a corresponding touch operation is valid. For example, when the user performs a touch operation greater than preset pressure on a region of a display unit 140 on which "3" is outputted as illustrated in the screen 703, the terminal 100 may control such that a selected number "3" is outputted to a character output region as illustrated in a screen 705.

The terminal 100 may provide a predetermined display effect with respect to a touch operation greater than predetermined pressure as shown so that the user may confirm a case of performing a touch operation less than predetermined pressure and a case of performing a touch operation greater than predetermined pressure. When a touch having pressure variation less than predetermined pressure occurs as illustrated in a screen 701, the terminal 100 may not provide a specific visual effect. When a touch having pressure variation greater than a predetermined value occurs as illustrated in a screen 703, the terminal 100 may provide a visual effect indicating pressure variation greater than a predetermined value around a corresponding touch point. For example, when a detection value such as the pressure is equal to or greater than a predetermined value, the visual effect may be provided. As described above, an operation function of a multi-touch panel of the present invention is supported such that a detection value including at least one of pressure variation, resistance variation, and voltage variation of a second type touch panel 145 may be separated for each level. Accordingly, the visual effect may be increased to a visual effect separated by levels. The visual effect is equally applicable to the foregoing exemplary embodiments or following exemplary embodiments.

As described above, an operation function of a multi-touch panel according to the exemplary embodiment of the present invention may minimize error generation by a sensitive touch panel during input of a character by certainly and clearly inputting characters in a character input procedure.

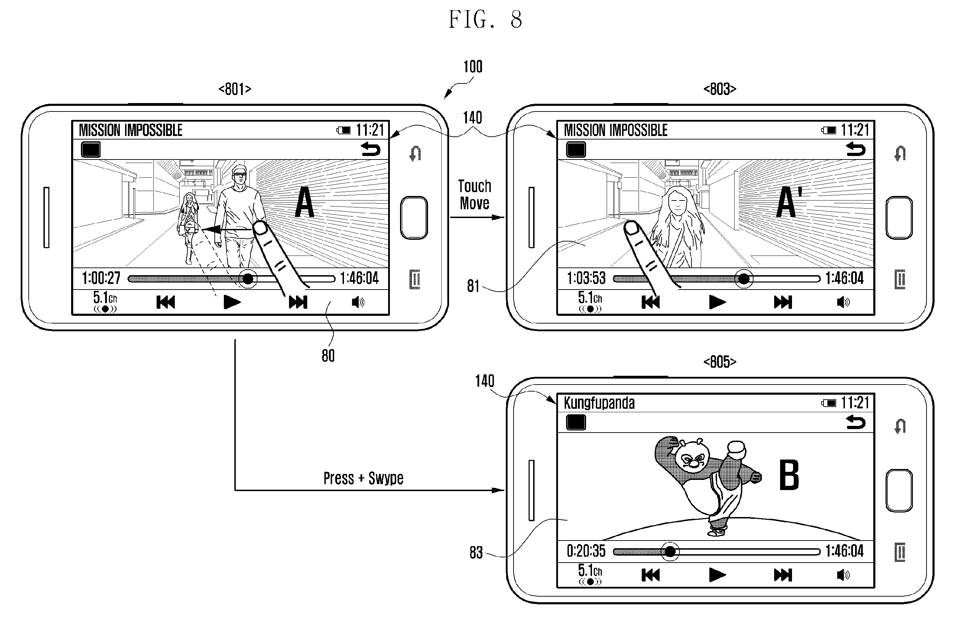

FIG. 8 is an exemplary diagram of a screen for describing moving image playback control of function application of a multi-touch panel according to a fourth exemplary embodiment of the present invention.

Referring now to FIG. 8, the terminal 100 of the present invention may output a first moving image screen 80 corresponding to a moving image file provided from a specific web server or stored in the memory according to a user request as illustrated in a screen 801. For example, if a specific moving image file is selected according to a user request or preset schedule information and an input signal for playing a corresponding moving image file is generated, the terminal 100 may control the display unit 140 to output a first moving image screen 80 according to playback of a corresponding moving image file. In this procedure, the user may perform a specific touch operation to search another screen included in the first moving image. For example, the user may perform touch and move operations less than predetermined pressure on a display unit 140 on which a first moving image screen 80 is outputted. Then, the terminal 100 may output a first another moving image screen 81 corresponding to another scene included in the first moving image on the display unit 140 as illustrated in a screen 803.

Meanwhile, the user may perform a touch operation for selecting a second moving image other than the first moving image. For example, the user may perform touch and swipe operations greater than predetermined pressure on the display unit 140 of a screen 801. If a touch event according to a corresponding touch operation is collected, the terminal 100 may output a second moving image screen 83 corresponding to the second moving image different from the first moving image on the display unit 140 as illustrated in a screen 803. To do this, the terminal 100 may select the second moving image stored in the memory 150 or a web server providing the first moving image may select and receive the second moving image. In this case, the second output moving image screen 83 may be a moving image arranged adjacent to the first moving image stored in the memory 150. For example, when a list with respect to entire moving images stored in the memory 150 or provided from a specific web server or another terminal is provided, the second moving image may be a moving image adjacent to a location of the first moving image on a corresponding list. In addition, when the user performs touch and swipe operations greater than predetermined pressure in the screen 803, the terminal 100 may remove the second moving image screen 83 from the display unit 140 and selects the third moving image different from the first and second moving images, and output a screen according to playback of the third moving image on the display unit 140.

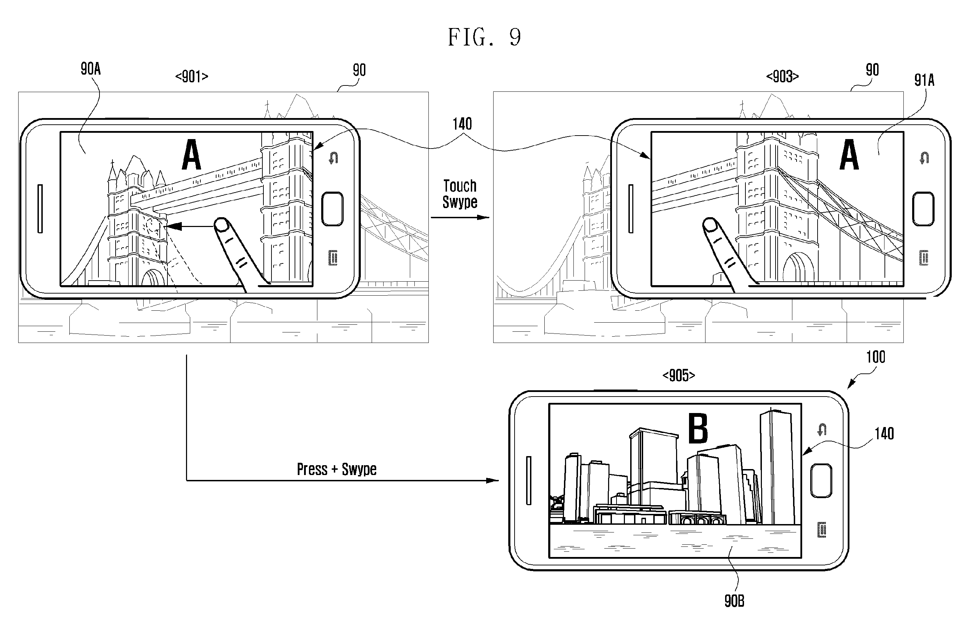

FIG. 9 is an exemplary diagram of a screen for describing still image search control of function application of a multi-touch panel according to a fifth exemplary embodiment of the present invention. FIG. 9 shows a "touch and swipe versus a "press and swipe" as detected by the touch panels.

Referring now to FIG. 9, the terminal 100 of the present invention may output a screen corresponding to a specific still image selected according to a user request among still images stored in the memory 150 or provided from a web server or another terminal on the display unit 140. In this case, the user may perform a touch operation for activating a zoom-in function to search a corresponding still image in detail. Then, the terminal 100 may output a screen with respect to the first selected still image on the display unit 140, and output a first partial screen 90A among first still image screens 90 larger than a screen size of the display unit 140 on the display unit 140 as illustrated in a screen 901 according to a zoom-in function request of the user.

Meanwhile, the user may perform a touch operation for search another region which is not currently outputted on the display unit 140 with respect to an enlarged still image screen according to a zoom-in function. In other words, the user may perform a touch operation (a touch and swipe) in a predetermined direction less than predetermined pressure. Then, if receiving a touch event according to a corresponding touch operation, the terminal 100 may output a second partial screen 91A corresponding to another screen region among the first still image screens 90 as illustrated in a screen 903 on the display unit 140.

The user may request search of another still image in a state that a partial screen among the first enlarged still image screens 90 is outputted. In this case, the user may perform a touch operation *press and swipe) to a predetermined direction greater than predetermined pressure. Then, the terminal 100 may remove the first still image screen 90 according to a corresponding touch operation from the display unit 140 and output the second still image screen 90B on the display unit 140 as illustrated in a screen 905. Meanwhile, the second still image screen 90B is outputted suited to the size of the display unit 140, but the present invention is not limited thereto. For example, the terminal 100 may apply a zoom-in ratio applied to the first still image screen 90 to the second still image screen 90B to output the applied result on the display unit 140 as the equally enlarged screen ratio.

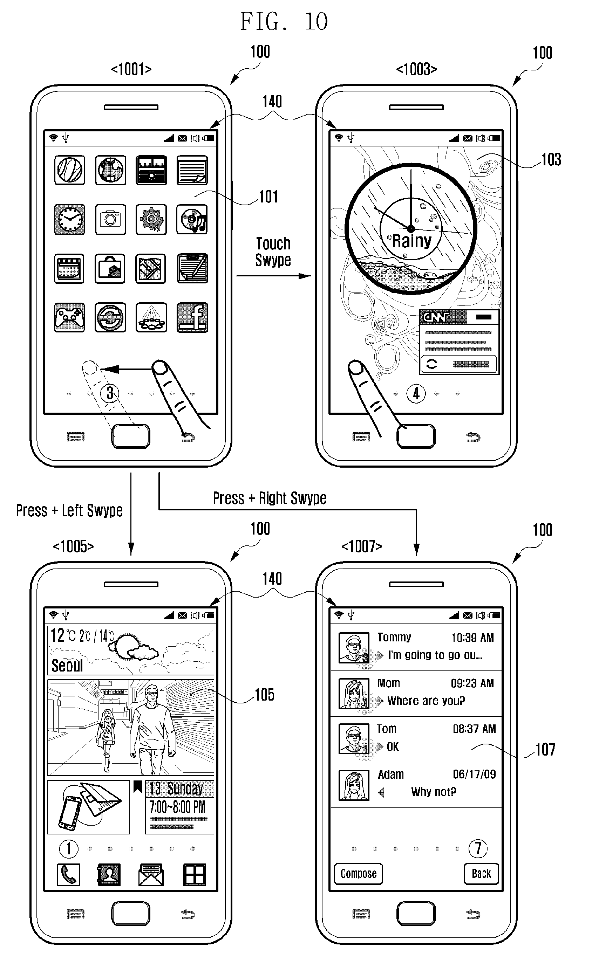

FIG. 10 is an exemplary diagram of a screen for describing search control of a plurality of pages in function application of a multi-touch panel according to a sixth exemplary embodiment of the present invention.

Referring now to FIG. 10, the terminal 100 of the present invention may output a specific page, for example, a menu page 101 on the display unit 140 as illustrated in a screen 1001 according to a user request. To do this, the user may generate an input signal for calling a menu page 101 of the terminal 100. Meanwhile, the user may wish to search another page in an output state of the menu page 101. Prior to the description, it is assumed that the terminal 100 includes total 7 pages and the menu page 101 is located at a third page among total seven pages. Then, the user may perform a touch operation in a predetermined direction, for example, a left direction less than predetermined pressure on the display unit 140 on which the menu page 101 is outputted as illustrated in a screen 1001.

If the user performs a touch operation corresponding to a predetermined direction less than the predetermined pressure to receive a corresponding touch event, the terminal 100 may output another page adjacent to the menu page 101, for example, a weather time information page 103 as illustrated in a screen 1003. For example, the terminal 100 may control the display unit 140 to output the weather time information page 103 adjacent to a current output menu page 101 with respect to parallel arranged pages on the display unit 140.

Meanwhile, the user may wish to search a first page of a first location of a corresponding page list in a current output screen state of the menu page 101. Then, the user may perform a touch greater than predetermined pressure and a swipe touch operation in a left direction as shown. If a touch event corresponding to a touch greater than predetermined pressure and a swipe touch operation in a left direction from the display unit 140 on which the menu page 101 is outputted occurs, the terminal 100 may output a first page 105 on the display unit 140 as illustrated in a screen 1005. The first page 105 may be a page optionally set by the user or a page optionally set by a designer having designed the terminal 100. For example, the first page 105 may be a widget page on which various widgets are displayed.

Meanwhile, the user may wish to search a final page located at a final point of a corresponding page list in a current output screen state of the menu page 101. Then, the user may perform a touch operation greater than predetermined pressure and a swipe touch operation in a right direction as shown. If a touch event corresponding to a touch operation greater than predetermined pressure and a swipe touch operation in a right direction is generated from the display unit 140 on which the menu page 101 is outputted, the terminal 100 may output a final page 107 on the display unit 140 as illustrated in a screen 1007. The final page 107 may be a page similar to the first page 105 optionally set by the user or a page optionally set by a designer designing the terminal 100. For example, the final page 107 may be a page such as a call log list, a message reception list, or an SNS message reception list.

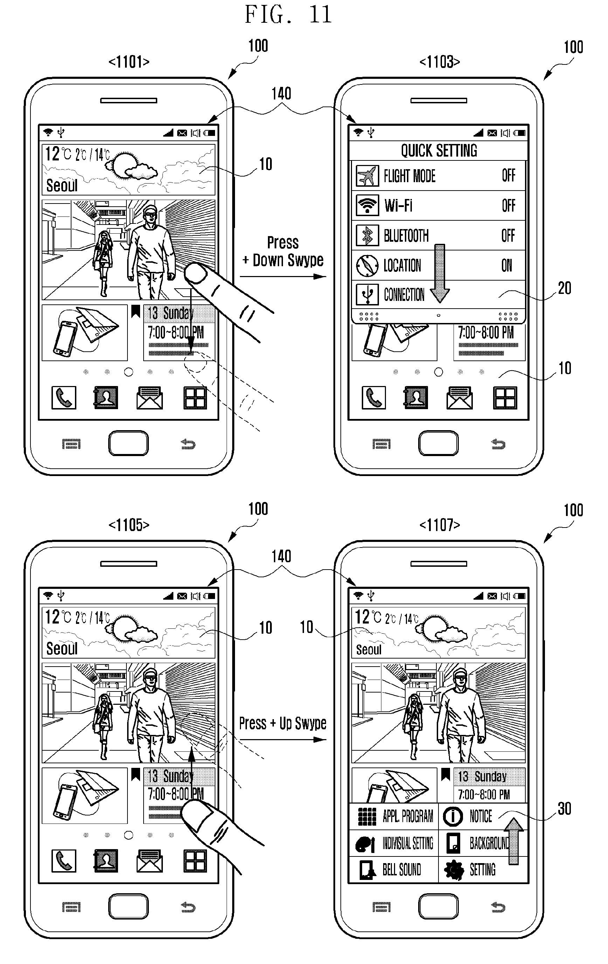

FIG. 11 is an exemplary diagram of a screen for describing search control of a hide region of function application of a multi-touch panel according to a seventh exemplary embodiment of the present invention.

Referring now to FIG. 11, the terminal 100 of the present invention may output a basic page 10 as illustrated in a screen 1101 on the display unit 140 according to a user request or preset schedule information. The basic page 10 is a page set by the user and may be a region on which various widgets, menus, and specific photographs are outputted. In the shown drawing, a weather widget is arranged at a top end of the basic page 10, a photograph is outputted to a center of the basic page 10, and other widgets such as weather and time widgets or a menu are outputted below the photograph. The basic page 10 may be changed by setting of the user. For example, the basic page 10 may be a menu page on which a plurality of menu items are outputted or a widget page on which a plurality of widget items are outputted. The basic page 10 may be a region on which other background images are outputted.

Meanwhile, in a state that the basic page 10 is outputted on the display unit 140, the user may wish to call a function arranged at an upper hide region among specific user functions supported from the user 100. For example, the user may witch to call a quick panel region 20 which is arranged at a top end of the display unit 140 of the terminal 100 and is outputted by touch-dragging an upper portion of an indicator region in a lower direction of the terminal 100. To do this, the user may perform a touch operation swiping from a specific region of a display unit 140 on which the basic page 10 is outputted to a predetermined direction, for example, to a lower direction greater than predetermined pressure. If a touch event corresponding to a lower direction touch swipe greater than predetermined pressure is generated in a state that the basic page 10 is outputted on the display unit 140, the terminal 100 may control the display unit 140 to display the quick panel region 20 from the upper side to a lower direction as illustrated in a screen 1103. The user may select or inactivate various modes of the terminal 100 through a corresponding quick panel region 20. The quick panel region 20 is illustrated to be partially overlaid with the basic page 10 in a screen 1103, but the present invention is limited thereto. In other words, the quick panel region 20 may be output to be overlaid with an entire portion of the basic page 10.

Meanwhile, in a state that the basic page 10 is outputted on the display unit 140, the user may wish to call a function arranged at a lower hide region among a specific user function supported from the terminal 100.

For example, the user may wish to call a hot menu region 30 which is arranged at a bottom end of the display unit 140 in the terminal 100 and outputted by touch-dragging it a upper direction of the terminal 100. In order to do the aforementioned, the user may perform a touch operation swiping a specific region of the display unit 140 on which the basic page 10 is outputted in a predetermined direction, for example, from a lower portion of the terminal 100 to an upper direction. If a touch event corresponding to a touch swipe of an upper direction greater than predetermined pressure is generated in a state that the basic page 10 is outputted on the display unit 140, the terminal 100 may control the display unit 140 to display the hot menu region 30 from a lower side thereof to an upper direction as illustrated in a screen 1107. The user may rapidly perform setting a specific menu of the terminal 100, for example, private setting, background screen setting, bell sound setting without performing separate depth search through a corresponding hot menu region 30.

As described above, the terminal 100 according to the exemplary embodiment of the present invention output a hide region, for example, a user function selection region hidden in an edge region of up, down, left, and right of the display unit 140 according to a touch operation greater than predetermined pressure. Accordingly, the terminal 100 of the present invention may call a user function selection without inconvenience of selecting a corresponding region from an edge region of the display unit 140. Although the foregoing exemplary embodiment has illustrated that the hide region is arranged at upper and lower edges of a screen, as described above, the hide region may be arranged at location is not limited if the location in which the hide region can be outputted to a central part of a screen from a specific edge of the display unit 140.

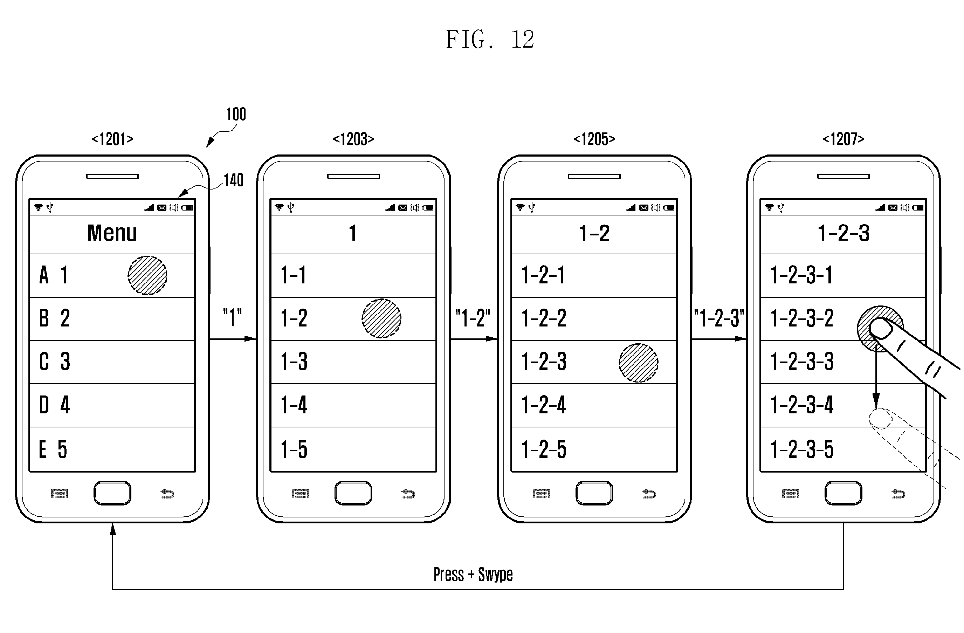

FIG. 12 is an exemplary diagram of a screen for describing depth search control of function application of a multi-touch panel according to an eighth exemplary embodiment of the present invention.

Referring now to FIG. 12, the terminal 100 of the present invention may output a menu including specific items as illustrated in a screen 1201 on the display unit 140 according to a user request. For example, the display unit 140 may output a list screen including five items. If the user performs a touch operation selecting an item "1" from a screen 1201, the terminal 100 may output a list screen including sub-items of the selected item "1" as illustrated in a screen 1203 on the display unit 140.

The user may generate a touch event selecting an item "1-2" from the screen 1203. Then, the terminal 100 may output a list item including sub-items of the item "1-2" as illustrated in a screen 1205. If the user performs a touch operation selecting an item "1-2-3" in a screen 1207, the terminal 100 outputs a screen including sub-items of the item "1-2-3" on the display unit 140 as illustrated in a screen 1207.

Particularly, the terminal 100 of the terminal returns to a screen 1021 being an initial screen in a state of a screen 1207 to which sub-items are outputted according to search of depth of multi-stages or is directly switched to a previous screen 1205. That is, when the user perform a swiping touch operation to a specific direction, for example, a right side with a force greater than predetermined pressure in a screen 1207, the terminal 100 may be directly switched to an initial or previous step of depth search in multi-stages.

Meanwhile, although the foregoing exemplary embodiment has illustrated that a touch operation greater than predetermined pressure is generated in a state of a screen 1207 and the terminal 100 returns to a screen 1201, when a corresponding touch operation together with pressure greater than the foregoing predetermined value is generated in a screen 1205, the terminal 100 may be equally switched to the screen 1021.

As described above, the terminal 100 of the present invention may perform a method of rapidly moving the screen to the uppermost category during a procedure of searching a depth of multi-stage. Accordingly, the present invention may minimize a touch operation necessary to be restored to the uppermost category during a search of sub-items of a predetermined depth.

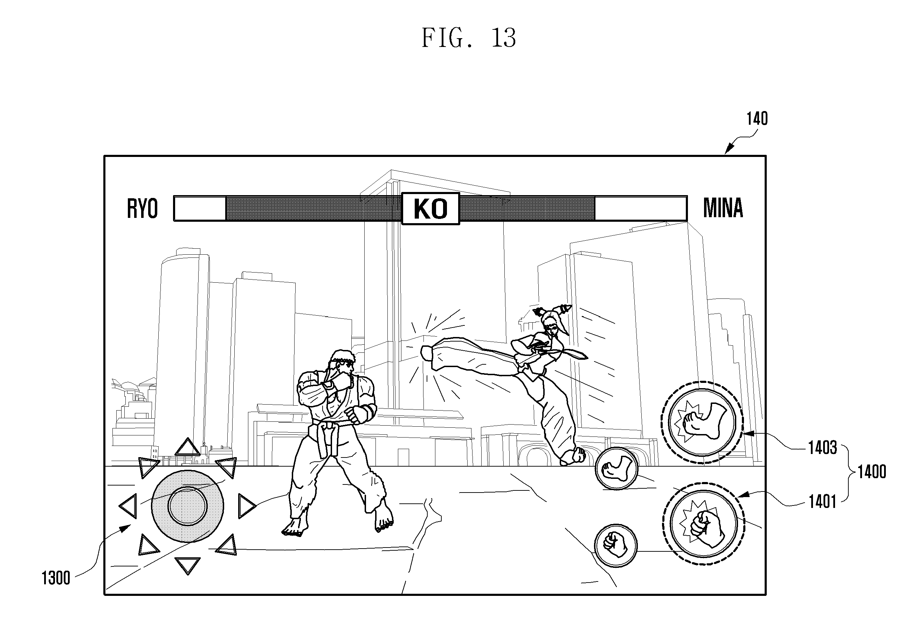

FIG. 13 is an exemplary diagram of a screen for describing operation control of a game function of function application of a multi-touch panel according to a ninth exemplary embodiment of the present invention.

Referring now to FIG. 13, the terminal 100 of the present invention may activate a game function provided from the terminal 100. Then, as shown, the terminal 100 may output a game function activation screen on the display unit 140. In this case, the terminal 100 may output various screen constituent elements associated with a game on the display unit 140, for example, as shown. Particularly, the terminal 100 may output operation key maps 1300 and 1400 for operating a game at one side of the screen.

The operation key maps 1300 and 1400 may include a navigation key map 1300 and a button key map 1400. The navigation key map 1300 generates various commands for controlling motion of avatar. The navigation key map 1300 may provide commands so that the avatar can select various movable directions. The button key map 1400 generates various commands for controlling a specific operation of the avatar. Although the avatar is shown as a human shape, the button key map 1400 may include a first button key map 1401 for controlling hand operations and a second button key map 1403 for controlling foot operations.

The operation key maps 1300 and 1400 may generate different commands according to pressure of a touch operation due to the multi-panel structure according to the present invention. For example, a touch operation less than predetermined pressure is generated from a first button key map 1401 for controlling the hand operations, a command corresponding to a small hand operation may be generated. If a touch operation greater than predetermined pressure is generated, a command corresponding to a large hand operation may be generated. In the same manner, if a touch operation less than predetermined pressure is generated from the second button key map 1403, a command corresponding to a small foot operation may be generated. If the touch operation greater than predetermined pressure is generated, a command corresponding to a large foot operation may be generated.

The navigation key map 1300 may perform different operation according to pressure of a touch operation with respect to the same direction. For example, when the user touches a button indicating a rear direction from the navigation key map 1300 by a touch operation less than predetermined pressure, the avatar may go back. Meanwhile, the user touches a button indicating a rear direction from the navigation key map 1300 by a touch operation greater than predetermined pressure, the avatar goes back while performing backward roll. The terminal 100 of the present invention may subdivide operation control of the avatar according to a level of the pressure and apply a corresponding function.

As described above, the terminal 100 according to the exemplary embodiment of the present invention may generate different commands according to input pressure of a touch operation with respect to various operation button key maps in an operation of a game function. Accordingly, the terminal 100 of the present invention may ensure various operation controls of the avatar while outputting the small number of operation buttons at a limited region. The output of the small number of operation buttons may support various screen configurations.

The foregoing terminal 100 may further include various additional modules according to provision forms. That is, when the mobile terminal 100 is a communication terminal, it may include constructions that are not mentioned such as a near distance communication module for near distance communication, an interface exchanging data in a wired communication scheme or a wireless communication scheme of the terminal 100, an Internet communication module communicating with an Internet to perform an Internet function, and a digital broadcasting module receiving and broadcasting digital broadcasting. Since the structural elements can be variously changed according to convergence trend of a digital device, no elements can be listed. However, the terminal 100 may include structural elements equivalent to the foregoing structural elements. Further, the terminal 100 of the present invention may be substituted by specific constructions in the foregoing arrangements according to the provided form or another structure. This can be easily understood to those skilled in the present art.

For example, the terminal 100 according to the exemplary embodiment of the present invention includes various information communication devices and multi-media devices such as Portable Multimedia Player (PMP), digital broadcasting player, music player, Personal Digital Assistant (PDA), a music player (e.g., MP3 player), portable game terminal, a smart phone, a notebook PC, and a handheld PC as well as mobile communication terminals operating based on respective communication protocols corresponding to various communication systems, and application devices thereof.

As described above, in the method of operating a multi-touch panel and the terminal supporting the same according to the present invention, various functions are simply and easily operated which are supported by the terminal without performing additional actions such as hand change or additional handling operation during a procedure of operating the terminal in part because of the versatility provided by the novel and non-obvious structure.

The above-described methods according to the present invention can be implemented in hardware, firmware or as software or computer code that can be stored in a recording medium such as a CD ROM, an RAM, a floppy disk, a hard disk, or a magneto-optical disk or computer code downloaded over a network originally stored on a remote recording medium or a non-transitory machine readable medium and to be stored on a local recording medium, so that the methods described herein can be loaded into hardware such as a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein. In addition, an artisan understands and appreciates that a "processor" or "microprocessor" constitute hardware that may be loaded with executable code in the claimed invention. The term "unit" as used herein, comprises hardware such as a microprocessor configured with machine executable code.

Although the multi-touch panel shown in described herein includes two panels, the claimed invention can include more than two panels, and there arranged of the panels can be overlapped, or in different arrangement on the display play then shown.

Although exemplary embodiments of the present invention have been described in detail hereinabove, it should be clearly understood that many variations and modifications of the basic inventive concepts herein taught which may appear to those skilled in the present art will still fall within the spirit and scope of the present invention, as defined in the appended claims.

## Claims

1. A terminal for supporting an operation of a multi-touch panel, the terminal comprising:
a first type touch panel that collects a touch event according to a contact;
a second type touch panel arranged for at least partial overlap with the first type touch panel for collecting a detection value of at least one of pressure, pressure variation, resistance, resistance variation, a voltage, and voltage variation according to the contact of the touch event;
a controller configured for determining and controlling performance of a command corresponding to the touch event collected by the first type touch panel and the second type touch panel wherein the touch event collected by the first type touch panel is differently applied according to the detection value from the second type touch panel; and
a memory storing a plurality of defined mapping tables such that a command corresponding to the touch event is differently provided based on a particular command identified in a respective mapping table of the plurality of mapping tables associated with the detection value.

2. The terminal of claim 1, wherein the memory comprises:
a first mapping table of the plurality of mapping tables defining commands corresponding to the touch event collected by the second type touch panel when the detection value is less than or equal to a predetermined value; and
a second mapping table defining the commands corresponding to the touch event when the detection value is greater than the predetermined value or is a specific level.

3. The terminal of claim 1, further comprising a buffer coupled with the controller for temporarily storing the touch event while confirming the detection value.

4. The terminal of claim 1, further comprising a display panel in which the first type touch panel and the second type touch panel are arranged on the display panel, wherein the display panel outputs a screen according to an operation of a specific user function and operates a screen according to the variation value and the touch event.

5. The terminal of claim 4, wherein the controller controls screen motion of a current output page corresponding to the touch event when the detection value is less than or equal to a predetermined value, and wherein a screen of a page other than the current output page is moved corresponding to the touch event when the detection value is greater than the predetermined value or is a preset specific level.

6. The terminal of claim 4, wherein the controller controls motion of another screen of a current output moving image corresponding to the touch event when the detection value is less than or equal to the predetermined value and wherein a moving image other than the current output moving image is outputted corresponding to the touch event when the detection value is greater than the predetermined value or is the preset specific level.

7. The terminal of claim 4, wherein the controller controls a region of a current output still image corresponding to the touch event to be output when the detection value is less than or equal to the predetermined value, and wherein a still image other than the current output still image is output corresponding to the touch event when the detection value is greater than the predetermined value or is the preset specific level.

8. The terminal of claim 4, wherein the controller controls movement of a screen to an adjacent page from among a plurality of pages associated with a current output page corresponding to the touch event when the detection value is less than or equal to the predetermined value, and wherein the screen is moved to a first or final page among the pages associated with the current output page corresponding to the touch event when the detection value is greater than the predetermined value or is the preset specific level.

9. The terminal of claim 4, wherein the controller controls at least one hidden region to be output from an edge region of a display panel to a central direction when the detection value is greater than the predetermined value or is the preset specific level.

10. The terminal of claim 4, wherein the controller controls movement of a screen to an uppermost category of corresponding search items when the touch event is generated in a case where the detection value is greater than the predetermined value or is the preset specific level in depth search of a multi-stage.

11. The terminal of claim 4, wherein the controller generates different commands with respect to a particular touch event generated from at least one among a plurality of operation key maps outputted on a game function screen according to the detection value, and controls avatars of different operations based on a corresponding command.

12. A method of operating a multi-touch panel, the method comprising:
collecting a value detected from a first touch panel and a touch event detected from a second touch panel according to contact of a touch object in a plurality of at least partially overlapped touch panels to which different touch techniques are applied; and
differently applying the touch event by a controller according to the collected detection value.

13. The method of claim 12, further comprising at least one:
referring to a particular one mapping table from a plurality of mapping tables by detecting a command corresponding to the touch event according to the detection value;
temporarily storing the touch event while confirming the detection value.

14. The method of claim 12, comprising:
outputting a screen according to an operation of a specific user function; and
operating a screen according to the variation value and the touch event detected by the second touch panel.

15. The method of claim 14, wherein the operating of the screen comprises one of:
moving a screen of a page to be currently output that corresponds to the touch event when the detection value is less than or equal to a predetermined value and outputting a corresponding screen or controlling movement of a screen of a page other than the current output page corresponding to the touch event when the detection value is greater than the predetermined value or is a preset specific level;
controlling by a controller a motion of another screen of a current output moving image corresponding to the touch event when the detection value is less than or equal to the predetermined value or controlling a moving image other than the current output moving image is output corresponding to the touch event when the detection value is greater than the predetermined value or is the preset specific level;
controlling by a controller a region of a current output still image corresponding to the touch event to be output when the detection value is less than or equal to the predetermined value or controlling a still image other than the current output still image to be output corresponding to the touch event when the detection value is greater than the predetermined value or is the preset specific level;
controlling by a controller a movement of a screen to an adjacent page among a plurality of pages associated with a current output page corresponding to the touch event when the detection value is less than or equal to the predetermined value or
controlling the screen to move to a first or final page among the pages associated with the current output page corresponding to the touch event when the detection value is greater than the predetermined value or is the preset specific level;
controlling by a controller of at least one region is output from an edge region of a display panel to a central direction when the detection value is greater than the predetermined value or is the preset specific level or controlling movement of a screen to a uppermost category of corresponding search items when the touch event is generated in a case where the detection value is greater than the predetermined value or is the preset specific level in depth search of a multi-stage; and
generating different commands with respective to a touch event generated from at least one among a plurality of operation key maps outputted on a game function screen according to the detection value or controlling avatars of different operations based on the generated different commands.
